# EUROPÄISCHE PATENTANMELDUNG

(11) **EP 2 574 704 A2**
(43) Veröffentlichungstag der Anmeldung: **03.04.2013**
(21) Anmeldenummer: 12006616.2
(22) Anmeldetag: 20.09.2012
(51) Int. Cl.: E04C 2/52, E04C 2/36

(54) **Vorgefertigtes Bauelement**

(30) Priorität: 27.09.2011 DE 102011114364
(71) Anmelder: Franz Carl Nüdling Basaltwerke GmbH + Co. KG, 36037 Fulda (DE)
(72) Erfinder: Klöppner, Bernhard, 36124 Eichenzell-Rothemann (DE); Tischer, Werner, Dr., 98634 Unterwald (DE); Weber, Jürgen, 36163 Poppenhausen (DE)
(74) Vertreter: Ellberg, Nils

(57) **Zusammenfassung**

Die Erfindung betrifft ein vorgefertigtes Bauelement, insbesondere Trockenestrichelement, mit wenigstens einem wärmeleitenden Deckschichtelement (11) und wenigstens einem Tragelement (12) für das Deckschichtelement (11) sowie wenigstens einem Isolationselement (13), wobei das Deckschichtelement (11) aus einem zementgebundenen Werkstoff gebildet ist und das Tragelement (12) zur Verringerung des Eigengewichts eine Gitterstruktur aufweist und wobei das Isolationselement (13) wenigstens in Öffnungen (19) der Gitterstruktur des Tragelements (12) angeordnet ist.

## Beschreibung

Die Erfindung betrifft ein vorgefertigtes Bauelement, welches insbesondere als Bodenelement bzw. Trockenestrichelement, als Wandelement oder als Deckenelement zum Einsatz kommen kann. Ferner betrifft die Erfindung die entsprechenden Verwendungen des vorgefertigten Bauelements sowie einen Ausgangsstoff zur Herstellung von Teilen des Bauelements.

Die Erfindung befasst sich im Wesentlichen mit der Klimatisierung von Bauwerken, insbesondere Gebäuden.

Zu diesem Zweck sind zum Beispiel verschiedene Fußbodentemperiersysteme bekannt, bei denen medienführende Leitungen im Estrich verlegt werden. Die Leitungen bestehen in der Praxis üblicherweise aus Kunststoff in denen warmes Wasser zirkuliert, wobei die Wärme des in der Leitung geführten Mediums an den Estrich und damit den Raum bzw. die Umgebung abgegeben wird. Bekannt sind weiterhin entsprechende Kühlsysteme.

Bekannt sind ferner Fußbodenheizungssysteme, die in Verbindung auf Trockenestrich verlegt werden. In der Regel sind die medienführenden Leitungen einer Abdeckung aus Blech angeordnet, um die im Medium gespeicherte Energie zwischen den Leitungen homogen zu verteilen und gleichmäßig an den Raum abzugeben.

Allen bekannten Systemen inhärent ist eine konstruktionsbedingte Trägheit, die dazu führt, dass die Aufheizung des Raumes bzw. der Umgebung nur langsam erfolgen kann. Verantwortlich hierfür ist die geringe Wärmeleitfähigkeit des Estrichs bzw. des Trockenestrichs als Deckschichtelement.

Hiervon ausgehend liegt der Erfindung die Aufgabe zugrunde ein vorgefertigtes Bauelement zur Verfügung zu stellen, das nicht die Nachteile bekannter Fußbodenheizungssysteme aufweist.

Ein erfindungsgemäßes vorgefertigtes Bauelement weist die Merkmale des Anspruchs 1 auf. Es ist demnach vorgesehen, dass das Bauelement aus wenigstens drei Komponenten besteht, nämlich dem wärmeleitendem Deckschichtelement, einem Tragelement für das Deckschichtelement sowie einem Isolationselement. In einigen Varianten der Erfindung kann das Tragelement allerdings entfallen.

Eine Besonderheit des erfindungsgemäßen Bauelements besteht darin, dass das Deckschichtelement aus einem zementgebundenen Werkstoff gebildet ist und das Tragelement zur Verringerung des Eigengewichts eine Gitterstruktur aufweist. Das Isolationselement ist wiederum in Öffnungen der Gitterstruktur des Tragelements angeordnet.

Eine erste Besonderheit besteht darin, dass das Deckschichtelement durch Verwendung von besonderen Zuschlagstoffen eine erhöhte Wärmeleitfähigkeit aufweist. Denkbar ist zum einen die Verwendung von ultrahochfestem Beton für das Deckschichtelement und/oder die Verwendung von Zuschlagstoffen mit erhöhter Wärmeleitfähigkeit wie beispielsweise Quarzit oder Graphit.

Der Vorteil der Verwendung von UHPC für das Deckschichtelement besteht zum einen darin, dass dieses bei gleicher Stabilität dünner ausgeführt werden kann, sodass die Trägheit des Systems verringert wird. Zum anderen besitzt UHPC eine größere Dichte als herkömmlicher Beton und somit eine höhere Wärmeleitfähigkeit. Geht man davon aus, dass ein Zementestrich bzw. Normalbeton eine Wärmeleitfähigkeit von ca. 1,0 W/(mK) aufweist, so ergibt sich durch die Verwendung von UHPC eine Erhöhung der Wärmeleitfähigkeit auf 1,5 W/(mK). Alternativ oder zusätzlich können die Zuschlagstoffe bzw. die Gesteinskörnungen so gewählt werden, dass sich insgesamt eine höhere Wärmeleitfähigkeit ergibt. Denkbar ist beispielsweise die Zugabe von Quarzit mit einer Wärmeleitfähigkeit von 6 bis 12 W/(mK), die bei einer Zugabe von 33 Gew.-% zu einer Erhöhung der Wärmeleitfähigkeit auf 2,35 W/(mK) führt. Darüber hinaus kann Graphit in einer Größenordnung von bis zu 20 Gew.-% zugegeben werden, was zu einer weiteren Erhöhung der Wärmeleitfähigkeit auf 3,5 W/(mK) führt.

Eine weitere Besonderheit besteht in der Anordnung eines Isolationselements, welches wie eingangs genannt in den Öffnungen der Gitterstruktur des Tragelements vorgesehen sein soll. Vorzugsweise verfügt das Isolationselement über eine Isolationsschicht, die durchgehend unterhalb des Tragelements angeordnet ist und an den Isolationskörper angeformt sind, die in die Öffnungen der Gitterstruktur des Tragelements ragen und die Öffnungen ausfüllen. In einigen Ausführungsbeispielen der Erfindung wird allerdings auf ein Tragelement verzichtet, sodass das Isolationselement auch nur eine Isolationsschicht aufweisen kann.

Das Tragelement - sofern vorhanden - kann vorzugsweise aus normalem Beton bestehen oder auch aus dem gleichen oder einem ähnlichen Material wie das Deckschichtelement.

Eine weitere Besonderheit kann darin bestehen, dass dem Deckschichtelement PCMs zugefügt werden können.

Eine weitere Besonderheit kann darin bestehen, dass das vorgefertigte Bauelement in einer seiner Varianten mit einem Zugspannungselement zur Aufnahme von Zugspannungen versehen ist.

Zur Aufnahme von medienführenden Leitungen kann das Deckschichtelement vorzugsweise nutenförmige Aussparungen im Bereich seiner Oberseite aufweisen. Die Aussparungen mit den darin angeordneten Leitungen können mit einem speziellen Baustoffgemisch, welches hinsichtlich der Zusammensetzung dem Deckschichtelement entsprechen kann, verfüllt werden.

Neben der Konstruktion des Bauelements wird weiterhin Schutz beansprucht für den Einsatz des Bauelements in einer seiner Varianten als Boden, Wand oder Deckenelement. Das Bauelement weist bei Verwendung als Wand oder Deckenelement allerdings in der Regel keine Tragelemente auf.

Weiterhin wird Schutz beansprucht für die Baustoffzusammensetzung bzw. das Baustoffgemisch zur Herstellung des Deckschichtelements. Dieses Baustoffgemisch kann auch benutzt werden, um die Leitungen im Deckschichtelement zu vergießen. Insofern wird hier ein eigenständiger Schutz für das Baustoffgemisch beantragt.

Weitere Einzelheiten und bevorzugte Ausgestaltungen der Erfindung ergeben sich aus den Unteransprüchen und der Beschreibung im Übrigen. Bevorzugte Ausführungsbeispiele der Erfindung werden nachfolgend anhand der Zeichnung beschrieben. In dieser zeigen:
- Fig. 1: ein vorgefertigtes Bauelement in schematischer räumlicher Darstellung,
- Fig. 2: die Komponenten des Bauelements in schematische räumlicher Darstellung,
- Fig. 3: ein Vertikalschnitt durch das Bauelement,
- Fig. 4: eine zweites Ausführungsbeispiel eines Bauelements in räumlicher Darstellung,
- Fig. 5: einen Vertikalschnitt durch das Bauelement gemäß Fig. 3,
- Fig. 6: ein drittes Ausführungsbeispiel eines Bauelements in einem Vertikalschnitt, und
- Fig. 7: ein viertes Ausführungsbeispiel eines Bauelements in einem Vertikalschnitt.

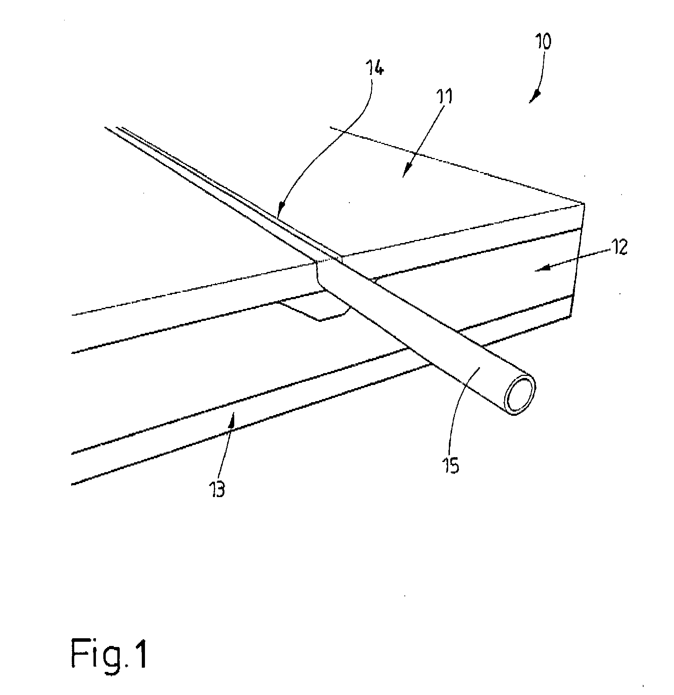

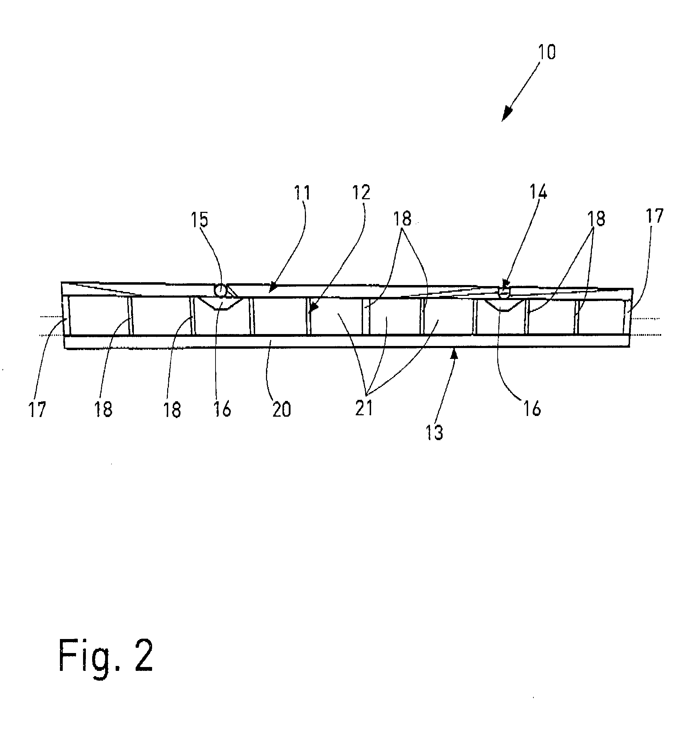

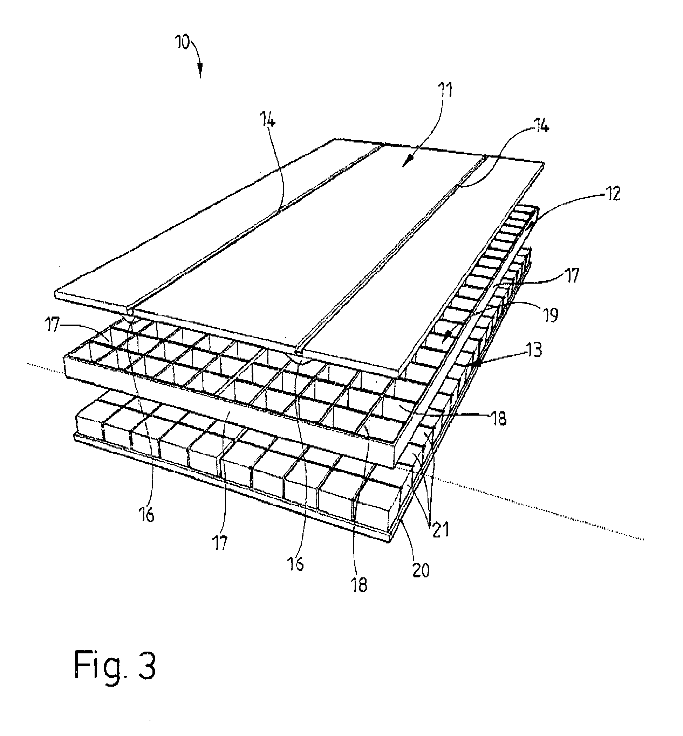

In Fig. 1 bis 3 ist ein erstes Ausführungsbeispiel eines vorgefertigten Bauelements 10 gezeigt, das als Trockenestrichelement zum Einsatz kommen kann.

Das Bauelement 10 besteht im Ausführungsbeispiel aus drei Komponenten, nämlich einem oberen Deckschichtelement 11, einem darunter angeordneten Tragelement 12 sowie einem Isolationselement 13. Es sei an dieser Stelle schon angemerkt, dass in einigen Ausführungsbeispielen der Erfindung auf das Tragelement 12 verzichtet wird.

Die drei Komponenten des Bauelements 10 ergeben zusammengesetzt ein im Grundriss rechteckiges Bauelement 10. Denkbar sind allerdings auch andere Grundrissformen. Mehrerer solcher Bauelemente 10 können in einer durchgehenden Ebene nebeneinander verlegt werden, um z. B. einen Trockenestrich eines Gebäudes zu bilden.

Das Deckschichtelement 11 bildet eine zum Raum hin weisende Oberseite des Bauelements 10. Im Deckschichtelement 11 sind Aussparungen 14 eingeformt zur Aufnahme von medienführenden Leitungen 15, im vorliegenden Fall also vorzugsweise für (Wasser-) Leitungen einer Fußbodenheizung. Im gezeigten Ausführungsbeispiel sind zwei zueinander parallele Aussparungen 14 vorgesehen, die sich über die gesamte Länge des Bauelements 10 erstrecken. Es ist aber auch denkbar, dass weitere Aussparungen 14 vorgesehen sind, die die gezeigten Aussparungen 14 kreuzen, wie bei herkömmlichen Fußbodenheizungen durchaus üblich. Die Anordnung der Aussparungen 14 im gezeigten Ausführungsbeispiel ist daher rein exemplarisch.

Eine weitere Besonderheit kann darin bestehen, dass die Dicke des Deckschichtelements 11 etwa dem Durchmesser der Leitungen 15 entspricht, wie in den Figuren gezeigt. In diesem Fall können unterseitig des Deckschichtelements 11 Verstärkungen 16 ausgebildet bzw. angeformt sein, um die Tragfähigkeit des Deckschichtelements 11 zu erhalten. Die Verstärkungen 16 können aber auch unabhängig von der Lage der Leitungen 15 bzw, der Aussparungen 14 gezielt angeordnet werden.

Das Deckschichtelement 11 ruht auf dem Tragelement 12. Eine Besonderheit des Tragelements 12 besteht darin, dass dieses gitterförmig ausgebildet ist. Das Tragelement 12 verfügt über durchgehend umlaufende, aufrechte Seitenwände 17 als äußere Begrenzung, sowie parallel bzw. quer hierzu verlaufende Innenwände 18, die jeweils zwischen zwei gegenüberliegenden Seitenwänden 17 verlaufen. Zwischen den beiden längsgerichteten Seitenwänden 17 sind mehrere entsprechende Innenwände 18 mit Abstand zueinander angeordnet. Parallel zu den querverlaufenden Seitenwänden 17 sind entsprechende quergerichtete Innenwände 18 vorgesehen. Auf diese Weise wird eine gitterartige Struktur geschaffen, wobei zwischen den Seitenwänden 17 und Innenwänden 18 jeweils Ausnehmungen 19 als Öffnungen gebildet sind, die sich im vorliegenden Fall durchgehend in vertikaler Richtung erstrecken und das Tragelement 12 durchbrechen.

Im vorliegenden Fall sind die Ausnehmungen 19 rechteckig bzw. quadratisch mit übereinstimmender Größe. Denkbar sind allerdings auch andere Gitter- bzw. Wabenstrukturen, gegebenenfalls auch mit abweichenden, insbesondere unregelmäßigen Formen.

Als dritte Komponente ist das Isolationselement 13 vorgesehen. Das Isolationselement 13 besteht im vorliegenden Fall aus einer Isolationsschicht 20, die durchgehend unterhalb des Tragelements 12 angeordnet ist, sowie an der Oberseite der Isolationsschicht angeordnete bzw. angeformte und in die Ausnehmungen 19 zumindest hineinragende Isolationskörper 21. Vorzugsweise sind die Isolationskörper 21 so bemessen, dass sie die Ausnehmungen 19 komplett ausfüllen, also im vorliegenden Ausführungsbespiel eine würfelförmige Gestalt aufweisen. Entsprechend der Anordnung der Innenwände 18 sind die Isolationskörper 21 voneinander beabstandet auf der Isolationsschicht 20 angeordnet.

Zur Verbesserung der Wärmeleitfähigkeit bzw. zur Verringerung der Trägheit des Deckschichtelements 11 können mehrere Maßnahmen zum Einsatz kommen, die entweder einzeln oder in beliebiger Kombination miteinander verwirklicht werden können. Diese Maßnahmen werden nachfolgend beschrieben:

### 1. Einsatz von UHPC

UHPC (ultrahochfester Beton) als solcher ist bekannt. Eine Besonderheit von UHPC ist eine extrem hohe Gefügedichte, die fast keine Poren und Mikrorisse aufweist. Durch den Einsatz von UHPC für die Herstellung des Deckschichtelements 11 ist es möglich die Dicke dieses Bauteils zu verringern, sodass die Trägheit des Systems verbessert bzw. verringert wird.

Zudem weist UHPC eine größere Wärmeleitfähigkeit als Normalbeton oder Zementestrich auf, sodass die Abgabe der Wärmeenergie aus den Leitungen 15 verbessert wird. Es hat sich gezeigt, dass durch Einsatz von UHPC mit einer Druckfestigkeit von wenigstens 100 N/mm² die Wärmeleitfähigkeit um 50% auf 1,5 W/(mK) verbessert werden kann.

### 2. Auswahl wärmeleitender Zuschlagstoffe

Durch Auswahl bestimmter Gesteinskörnungen für die Zuschlagstoffe ist es ebenfalls möglich, die Wärmeleitfähigkeit des Materials des Deckschichtelements 11 zu verbessern. Denkbar ist beispielsweise die Verwendung von Quarzit. In einem bevorzugten Ausführungsbeispiel kommt ein Quarzit mit einer Wärmeleitfähigkeit von 6 bis 12 W/(mK) zum Einsatz, welches einen Anteil von 33 Gew.-% am Zuschlagstoff hat.

In der Kombination mit dem Einsatz des UHPC lässt sich auf diese Weise die Wärmeleitfähigkeit auf 2.35 W/(mK) erhöhen.

Zur weiteren Steigerung der Wärmeleitfähigkeit kann in einem weiteren Optimierungsschritt Graphit zugegeben werden. Hier empfiehlt sich aus wirtschaftlichen Gründen eine Zugabe von maximal 20 Gew.-%, was zu einer weiteren Erhöhung der Wärmeleitfähigkeit auf 3,5 W/(mK) führt.

Der guten Ordnung halber wird nochmals darauf hingewiesen, dass die einzelnen Maßnahmen nicht zwingend kumulativ zum Einsatz kommen müssen, sondern in beliebiger Kombination miteinander verwendet werden können.

Grundsätzlich ist es denkbar das Deckschichtelement 11 aus einem Matrixmaterial aus insbesondere Mörtel, Beton, Liapor, Ziegel, Porenbeton, Keramik, etc. herzustellen. Als Gesteinskörnungen sind wärmeleitfähige Komponenten wie Basalt, Granit, Quarzit oder Kohlenstoff denkbar. Bei Verwendung einer Gesteinskörnung aus einem Kohlenstoff sind insbesondere Materialen wie Naturgraphit, synthetischer Graphit, expandierter Graphit, Kohlenstofffasern, Ruße und dergleichen denkbar, sowie sämtliche Mischungen der genannten Stoffe.

Das Tragelement 12 kann vorzugsweise aus einem Normalbeton bestehen. Alternativ ist auch eine Verwendung des Baustoffs für das Deckschichtelement 11 denkbar, nach Maßgabe einer der vorstehend erörterten Varianten. Ebenfalls denkbar ist die Verwendung von Leichtbeton, Porenbeton, Ziegel, Keramik, etc..

Das Isolationselement 13 besteht vorzugsweise aus einem wärmeisolierenden Material. Denkbar sind sowohl geschäumte Werkstoffe als auch Fasermaterialien. Insbesondere können die geschäumten Werkstoffe aus anorganischen Materialien (z.B. Schaumglas) oder aus organischen Materialien bestehen (z.B. geschäumte Polymere wie Polystyrol, Polyurethan, etc.). Sofern Fasermaterialien zum Einsatz kommen ist die Verwendung von anorganischen Fasermaterialien (z. B. Glasfaser, Steinfaser, Borfaser, Magnesiumfaser, etc.) denkbar. Ebenfalls denkbar ist der Einsatz von organischen Fasermaterialien (z. B. Hanffaser, Jute, Sisal, Polymerfasern wie Polypropylen, Polyamid, etc.) Denkbar sind ebenfalls alle Kombinationen der vorstehend genannten Stoffe.

Die Verbindung der drei Elemente kann mittels Verklebung erfolgen oder durch hydraulische Binder wie Zement oder dergleichen.

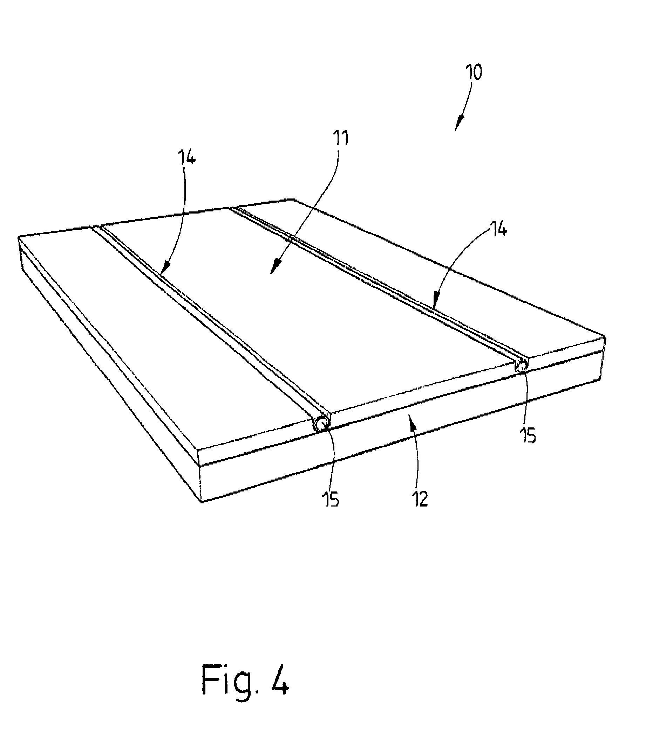

Ein zweites Ausführungsbeispiel ist in Fig. 4 gezeigt. Im Unterschied zum ersten Ausführungsbeispiel gemäß Fig. 1 bis 3 weist das Bauelement 10 kein separates Isolationselement 13 auf. Ein solches Bauelement 10 kann ebenfalls als Trockenstrichelement benutzt werden. Es ist aber auch denkbar, dass das Bauelement 10 als Wand- oder Deckenelement zum Einsatz kommt.

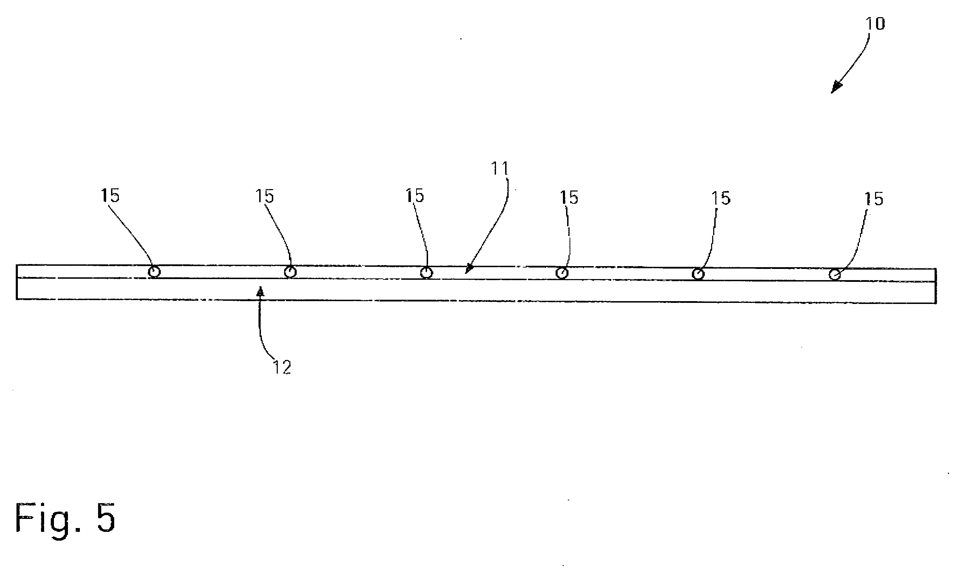

Es ist vorgesehen, dass in diesem Fall das Tragelement 12 eine deutlich geringere Wärmeleitfähigkeit als das Deckschichtelement 11 aufweist, vorzugsweise eine Wärmeleitfähigkeit von weniger als 1 W/(mK). Fig. 5 zeigt einen Schnitt durch eine solche Konstruktion. Das Tragelement 12 ist dabei dem Boden zugewandt, sodass das Deckschichtelement 11 dem Raum zugewandt ist. Bei dem Tragelement 12 kann es sich um einen zementgebundenen Werkstoff handeln oder einen Dämmstoff. Das Tragelement 12 dient damit quasi auch als Isolationselement 13 und kann gegebenenfalls geringe Tragkraft aufweisen.

Das in Fig. 4 und 5 gezeigte Bauelement 10 kann weiterhin um ein Zugspannungselement ergänzt werden, das zur Aufnahme von Zugspannungen zum Einsatz kommt. Vorzugsweise kann das Zugspannungselement aus einem zementgebundenen Werkstoff bestehen und eine Bewehrung aus Stahl, Glasfaser, Kohlenstofffaser, Carbonfaser, Kunststofffaser oder einem textilen Gewebe aufweisen. Im Fall von Kunststofffasern können PA 6-, PA 66- oder PET-Fasern zum Einsatz kommen. Vorzugsweise wird das Zugspannungselement unterhalb des Tragelements 12 angeordnet.

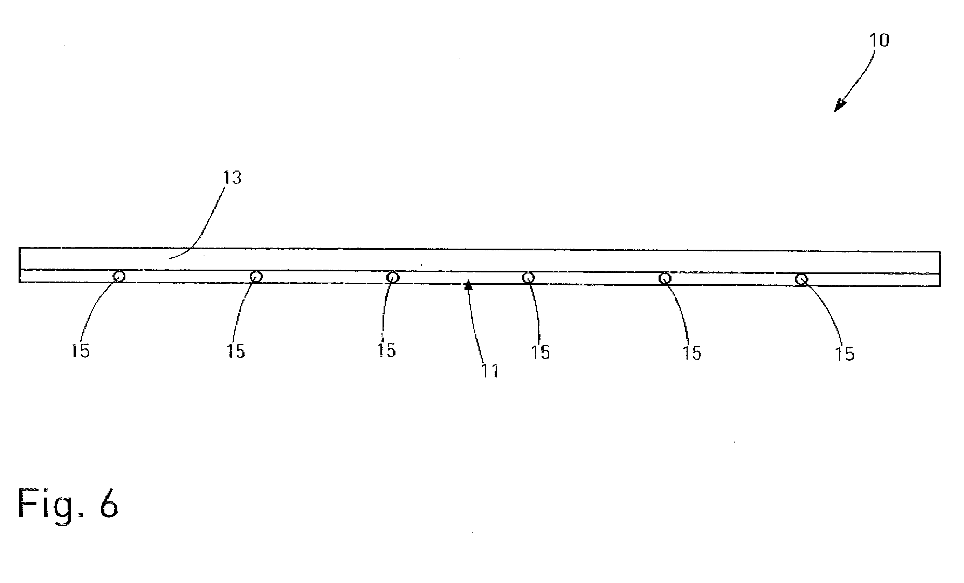

Ein drittes Ausführungsbeispiel ist in Fig. 6 gezeigt. Im Unterschied zum ersten Ausführungsbeispiel gemäß Fig. 1 bis 3 weist das Bauelement 10 kein Tragelement 12 auf. Ein solches Bauelement 10 kann beispielsweise als Wand- oder Deckenelement benutzt werden. Das Isolationselement 13 kann in solchen Fällen als durchgehende Isolationsschicht ausgebildet sein. Das Isolationselement 13 ist dabei der Wand bzw. der Decke zugewandt, sodass das Deckschichtelement 11 dem Raum zugewandt ist.

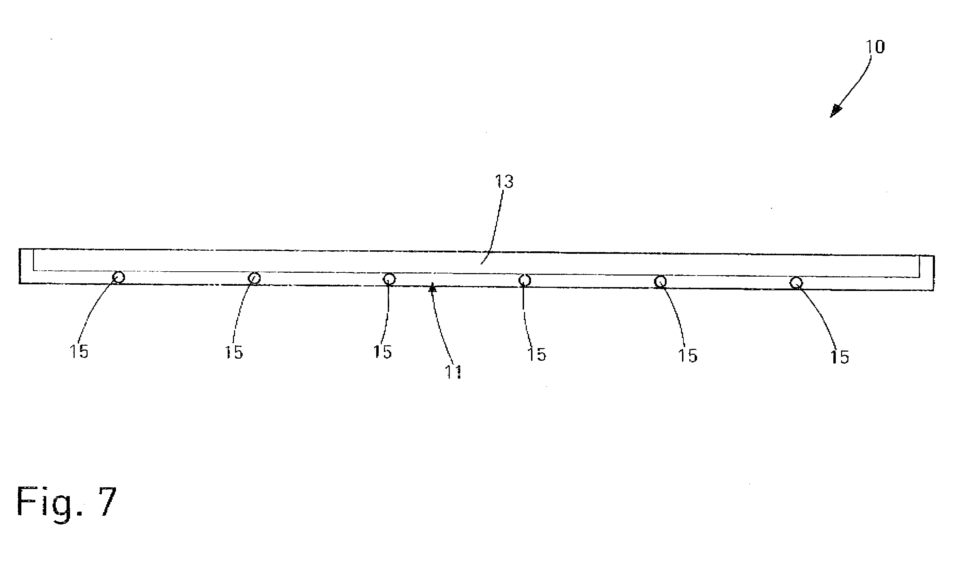

Wie im vierten Ausführungsbeispiel in Fig. 7 gezeigt, kann das Deckschichtelement 11 vorzugsweise im Bereich von einigen oder allen Seitenrändern hochgezogen bzw. aufgekantet und deckt somit Seitenränder des Isolationselements 13 ab.

Es versteht sich, dass hinsichtlich des Ausführungsbeispiels 2 bis 4 lediglich die Unterschiede zum ersten Ausführungsbeispiel beschrieben wurden. Hinsichtlich Anordnung der Leitungen 15 und der Materialwahl gelten die Ausführungen des ersten Ausführungsbeispiels.

### Bezugszeichenliste:

- 10: Bauelement
- 11: Deckschichtelement
- 12: Tragelement
- 13: Isolationselement
- 14: Aussparung
- 15: Leitung
- 16: Verstärkung
- 17: Seitenwand
- 18: Innenwand
- 19: Ausnehmung
- 20: Isolationsschicht
- 21: Isolationskörper

## Patentansprüche

1. Vorgefertigtes Bauelement, insbesondere Trockenestrichelement, mit wenigstens einem wärmeleitenden Deckschichtelement (11) und wenigstens einem Tragelement (12) für das Deckschichtelement (11) sowie wenigstens einem Isolationselement (13), wobei das Deckschichtelement (11) aus einem zementgebundenen Werkstoff gebildet ist und das Tragelement (12) zur Verringerung des Eigengewichts eine Gitterstruktur aufweist und wobei das Isolationselement (13) wenigstens in Öffnungen (19) der Gitterstruktur des Tragelements (12) angeordnet ist.

2. Vorgefertigtes Bauelement nach Anspruch 1, **dadurch gekennzeichnet, dass** das Deckschichtelement (11) durch Verwendung von besonderen Zuschlagstoffen eine erhöhte Wärmeleitfähigkeit aufweist.

3. Vorgefertigtes Bauelement nach Anspruch 2, **dadurch gekennzeichnet, dass** das Deckschichtelement (11) durch einen Ultrahochfesten Beton (UHPC) gebildet ist.

4. Vorgefertigtes Bauelement nach Anspruch 2, **gekennzeichnet durch** die Verwendung von Zuschlagstoffen mit erhöhter Wärmeleitfähigkeit für das Deckschichtelement (11), insbesondere Quarzit und/oder Graphit.

5. Vorgefertigtes Bauelement nach Anspruch 4, **gekennzeichnet durch** die Verwendung von Quarzit mit einer Wärmeleitfähigkeit von 6 bis 12 W/(mK), und/oder **durch** die Verwendung von Graphit mit einem Anteil des Graphits an dem Deckschichtelement (11) bis zu 30%, vorzugsweise bis zu 20%.

6. Vorgefertigtes Bauelement nach Anspruch 5, **gekennzeichnet durch** einen Anteil des Quarzits an dem Deckschichtelement (11) zwischen 10 bis 50 Gew.-%, vorzugsweise 20 bis 40 Gew.-%, insbesondere etwa 33 Gew.-%.

7. Vorgefertigtes Bauelement nach Anspruch 1 oder einem der weiteren vorhergehenden Ansprüche, **gekennzeichnet durch** die Verwendung von PCMs (Phase Change Materials) im Bereich des Deckschichtelements (11) zur Wärme- oder Kältespeicherung, und/oder **durch** die Verwendung eines Normalbetons für das Tragelement (12).

8. Vorgefertigtes Bauelement nach Anspruch 1 oder einem der weiteren vorhergehenden Ansprüche, **dadurch gekennzeichnet, dass** das Isolationselement (13) eine unterhalb des Tragelements (12) durchgehende Isolationsschicht (20) aufweist und mehrere gegenüber der Isolationsschicht (20) abstehende Isolationskörper (21), die in den Öffnungen (19) der Gitterstruktur des Tragelements (12) angeordnet sind, und/oder dass das Bauelement (10) kein Tragelement (12) aufweist und dass unterhalb des Deckschichtelements (11) eine Isolationsschicht (20) als Isolationselement (13) angeordnet ist.

9. Vorgefertigtes Bauelement nach Anspruch 1 oder einem der weiteren vorhergehenden Ansprüche 2 bis 7, **gekennzeichnet durch** die Verwendung von besonderen Zuschlagstoffen nach einem oder mehreren der Ansprüche 2 bis 6 für das Tragelement (12).

10. Vorgefertigtes Bauelement nach Anspruch 1 oder einem der weiteren vorhergehenden Ansprüche, **dadurch gekennzeichnet, dass** das Bauelement (10) ein Zugspannungelement zur Aufnahme von Zugspannungen angeordnet ist, wobei das Zugspannungselement vorzugsweise eine Bewehrung aus Fasern oder einem Gewebe aufweist, insbesondere aus Stahl, Glasfaser, Kohlenstofffaser, Carbonfaser, Kunststofffaser oder dergleichen, und wobei das Zugspannungselement vorzugsweise unterhalb des Tragelements (12) - sofern vorgesehen - angeordnet ist, und/oder dass das Deckschichtelement (11) nutförmige Aussparungen (14) im Bereich seiner Oberseite zur Aufnahme von medienführenden Leitungen (15) aufweist.

11. Vorgefertigtes Bauelement nach Anspruch 10, **dadurch gekennzeichnet, dass** die Leitungen (15) in den Aussparungen (14) mit einem zementgebundenen Werkstoff nach einem oder mehreren der Ansprüche 2 bis 6 vergossen sind, vorzugsweise unter Abdeckung der Leitungen (15) durch den Werkstoff.

12. Verwendung eines vorgefertigten Bauelements (10) nach einem oder mehreren der Ansprüche 1 bis 11 als Trockenstrichelement.

13. Verwendung eines vorgefertigten Bauelements (10) gemäß Anspruch 8 als Wandelement.

14. Verwendung eines vorgefertigten Bauelements (10) nach einem oder mehreren der Ansprüche 1 bis 11 als Deckenelement, wobei vorzugsweise die Leitungen (15) innerhalb des Deckschichtelements angeordnet sind.

15. Baustoffgemisch für ein Deckschichtelement (11) nach einem oder mehreren der vorhergehenden Ansprüche oder zum Vergießen von Leitungen (15) in Nuten (14) eines Deckschichtelements (14) nach einem oder mehreren der vorhergehenden Ansprüche, wobei das Baustoffgemisch wenigstens Zement sowie eine Gesteinskörnung mit höher Wärmeleitfähigkeit, vorzugsweise Quarzit und/oder Graphit enthält, wobei das Baustoffgemisch vorzugsweise durch Vermischung mit einer Flüssigkeit, insbesondere Wasser, verarbeitbar ist.
